# EUROPÄISCHE PATENTSCHRIFT

(11) **EP 0 942 844 B1**
(45) Veröffentlichungstag und Bekanntmachung des Hinweises auf die Patenterteilung: **21.11.2001**
(21) Anmeldenummer: 97951855.2
(22) Anmeldetag: 10.12.1997
(51) Int. Cl.: B60N 2/44

(54) **VERSTELLVORRICHTUNG**
ADJUSTING DEVICE
DISPOSITIF DE REGLAGE

(30) Priorität: 10.12.1996 DE 19653722
(43) Veröffentlichungstag der Anmeldung: 22.09.1999
(73) Patentinhaber: Brose Fahrzeugteile GmbH & Co. KG, 96450 Coburg (DE)
(72) Erfinder: SCHUMANN, Peter, D-96253 Untersiemau (DE)
(74) Vertreter: Müller, Wolfram Hubertus, Dipl.-Phys.
(86) Internationale Anmeldenummer: DE9702946
(87) Internationale Veröffentlichungsnummer: WO9825791

(56) Entgegenhaltungen:
- EP-A- 0 505 090
- DE-A- 3 146 289
- DE-A- 3 632 165
- DE-A- 3 819 345
- DE-U- 8 629 207
- GB-A- 2 211 565

## Beschreibung

Die Erfindung bezieht sich auf eine stufenlose, beidseitig wirkende Verstellvorrichtung nach dem Oberbegriff des Anspruchs 1.

Aus der DE 36 08 858 A1 ist ein ein- und feststellbares Schrittschaltwerk für eine Sitzhöhen- oder Rückenlehnenneigungs-Verstellung in Fahrzeugsitzen bekannt, das einen als Gestell dienenden ersten Gelenkarm, in dem eine Welle gelagert ist, die mit einem zweiten Gelenkarm drehverbunden ist, und ein verzahntes Stellrad zur Einstellung sowie einen Betätigungsarm mit zwei Mitnehmern aufweist. Zwischen der Welle und dem Stellrad sind zwei Schraubenfedern angeordnet, die an einer Aufnahmebuchse federnd anliegen und gegensinnig angeordnet und mit einem Endbereich an der Welle und dem anderen Endbereich an einem mit dem Stellrad drehverbundenen Anschlag beidseitig mit Spiel anliegen. Bei einer Schwenkbewegung des Betätigungsarms durch Hin- und Herschwenken ("Pumpen") eines starr mit dem Betätigungsarm verbundenen Handgriffes schlägt der Anschlag zuerst an die Schraubenfeder, die eine Drehung der Welle im gleichen Drehsinn sperren würde, entsperrt anschließend bei Fortsetzung der Schwenkbewegung diese Schraubenfeder und überträgt danach die weitere Schwenkbewegung auf die Welle.

Infolge des Verzahnungseingriffes zwischen den Mitnehmern und dem verzahnten Stellrad ermöglicht das aus der DE 36 08 858 A1 bekannte selbstarretierende Schrittschaltwerk ausschließlich eine abgestufte Sitzhöhen- oder Rückenlehnenneigungs-Verstellung. Weiterhin gestattet das bekannte Schrittschaltwerk aufgrund seiner speziellen Funktionsweise keine Variation der Bauform für unterschiedliche Einbautiefen und Übersetzungen der Kraftübertragung vom Betätigungshebel zur Welle,

Aus dem Dokument GB 2 211 565 A ist eine gattungsgemäße, stufenlose, beidseitig wirkende Verstellrichtung mit einem als Antriebswelle ausgebildeten Antriebselement sowie einem als Ritzel augebildeten Abtriebselement bekannt, das bei einer Drehbewegung des Antriebselements in dem einen oder anderen Drehsinn winkelverstellbar ist. Bei der als zweiseitig wirkende Schlingfederbremse ausgebildeten Verstellvorrichtung führen antriebsseitige Drehmomente zum Freischalten des Antriebs und abtriebsseitige Drehmomente zum Blokkieren der Verstellvorrichtung. Dabei bewirkt ein antriebsseitiges Drehmoment in dem einen oder anderen Drehsinn ein Lösen der Schlingfedern von ihrer Anlage an ein Bremsgehäuse und ein Sperren beim Einleiten eines abtriebsseitigen Drehmoments. Jede Bewegung eines antriebsseitigen Hebels in beide Richtungen führt somit zum Anheben und Absenken eines Fahrzeugsitzes.

Aufgabe der vorliegenden Erfindung ist es, eine Verstellvorrichtung der eingangs genannten Gattung zu schaffen, die mit mehreren Hüben in der einen oder anderen Richtung verstellt werden kann und die durch modulare Bauweise in verschiedenen Bauformen für unterschiedliche Bautiefen, Oberflächen und Übersetzungsverhältnisse herstellbar ist.

Diese Aufgabe wird erfindungsgemäß durch die Merkmale des Anspruchs 1 gelöst.

Die erfindungsgemäße Lösung gibt eine Verstellvorrichtung an, die mit mehreren Hüben in der einen oder anderen Richtung verstellt werden kann und die durch modulare Bauweise in verschiedenen Bauformen für unterschiedliche Bautiefen, Oberflächen und Übersetzungsverhältnisse herstellbar ist.

Zur Ausbildung einer flachen und einen minimalen Durchmesser aufweisenden Verstelleinrichtung ist die Kupplungseinrichtung konzentrisch zur Bremseinrichtung angeordnet.

Alternativ kann die Kupplungseinrichtung koaxial und in axialer Richtung versetzt zur Bremseinrichtung angeordnet werden. Diese Ausführungsform zeichnet sich durch einen insgesamt geringen Durchmesser aus und eignet sich insbesondere für eine Anordnung bei geringem radialen Platzangebot.

In einer weiteren Alternative können die Kupplungseinrichtung und die Bremseinrichtung nebeneinander angeordnet und über eine formschlüssige Verbindungseinrichtung miteinander verbunden werden, womit eine Übersetzung zwischen der Antriebs- und der Abtriebsseite der Verstellvorrichtung geschaffen wird, die zum einen das Spiel auf der Antriebsseite der Verstellvorrichtung minimiert und zum anderen ein nahezu beliebiges Übersetzungsverhältnis zwischen Antriebsund Abtriebsseite zur Einstellung der Antriebskraft bzw. des Verstellweges bewirkt.

Eine vorteilhafte Weiterbildung der erfindungsgemäßen Lösung ist dadurch gekennzeichnet, daß das stufenlose Schrittschaltwerk eine das Antriebselement bei blockierter Kupplungseinrichtung in die Ausgangslage vor der Verstellbewegung zurückführende Rückstelleinrichtung enthält.

Die Rückstellung des Antriebselements bei blockierter Kupplungseinrichtung erleichtert das "Pumpen" in einer für den Benutzer vorteilhaften Stellung des Antriebselementes, wobei die stufenlose Verstellbarkeit eine beliebige Winkelstellung des Antriebselementes gestattet.

Eine Ausgestaltung der Kupplungseinrichtung ist durch einen koaxial zur Antriebsachse des Antriebselements angeordneten und klauenartig ausgebildeten Mitnehmer gekennzeichnet, der in eine abtriebsseitiges, klauenartiges Kupplungselemnt eingreift.

Die koaxiale Anordnung des Mitnehmers in Bezug auf die Antriebsachse des Antriebselements und dessen kraftschlüssige Verbindung bei Betätigung des Antriebselementes mit der Antriebsfeder schafft die Voraussetzung für unterschiedliche Bauformen der Verstellvorrichtung und einen einfachen und kostengünstigen Aufbau der Verstellvorrichtung. Die einzelnen Bauteil können dabei weitestgehend als Tiefziehteile ausgebildet werden, so daß eine einfache und billige Herstellung der Verstellvorrichtung gewährleistet ist.

Eine vorteilhafte Ausgestaltung der Rückstelleinrichtung ist durch eine an einer Lasche des ortsfesten Gehäuseteils und an einer Lasche einer drehbaren, koaxial zur Antriebsachse des Antriebselements angeordneten Hülse anliegende Rückstellfeder gekennzeichnet, wobei die Hülse über eine Lasche formschlüsaig mit der Antriebsfeder verbunden ist und die kraftschlüssige Anlage der Antriebsfeder am Mitnehmer mit beendeter Antriebskraft aufhebt.

Anhand von in der Zeichnung dargestellten Ausführungsbeispielen soll der der Erfindung zugrundeliegende Gedanke näher erläutert werden, wobei die konkrete Realisierung des Erfindungsgedankens nicht auf diese Ausführungsbeispiele beschränkt ist. Es zeigen:
- Figuren 1 und 2 -: einen Querschnitt und einen Längsschnitt durch eine stufenlose, beidseitig wirkende Verstellrichtung in flacher Bauweise;
- Figur 3 -: einen Längsschnitt durch eine stufenlose, beidseitig wirkende Verstellrichtung in schlanker Bauweise und
- Figuren 4 und 5 -: eine Seitenansicht und einen Längsschnitt durch eine stufenlose, beidseitig wirkende Verstellrichtung mit Übersetzungsgetriebe zwischen Antriebs- und Abtriebselement.

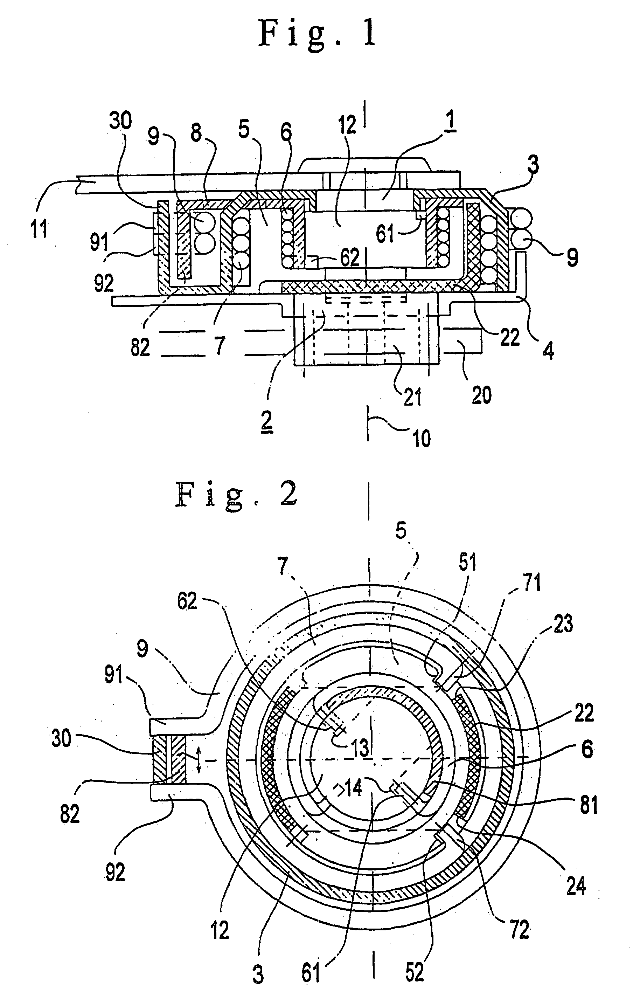

Figur 1 zeigt einen Längsschnitt und Figur 2 einen Querschnitt durch eine stufenlose, beidseitig wirkende Verstellvorrichtung mit einem stufenlosen Schrittschaltwerk. Zur besseren Unterscheidbarkeit ist ein Teil der Funktionselemente der in den Figuren 1 und 2 dargestellten Verstellvorrichtung schraffiert bzw. gepunktet dargestellt.

Die Verstellvorrichtung weist ein Antriebselement 1 auf, das einen Antriebshebel 11 und eine um die Drehachse 10 drehbare Antriebsachse 12 umfaßt. Koaxial zur Antriebsachse 12 ist ein Abtriebselement 2 angeordnet, das aus einem Ritzel 21 und einer mit dem Ritzel 21 verbundenen Abtriebsklaue 22 mit Anschlägen 23, 24 besteht, die den Schenkeln einer Bremsfeder 7 gegenüberstehen. Das Ritzel 21 kämmt in nicht näher dargestellter Weise mit beispielsweise dem Zahnsegment eines Gelenkarms 20, der Teil einer Sitzhöhen- oder Rückenlehnenneigungs-Verstelleinrichtung in Fahrzeugsitzen sein kann.

Konzentrisch zur Antriebsachse 12 ist eine Kupplungseinrichtung angeordnet, die aus einem topfförmigen Mitnehmer 5 und einer Antriebsfeder 6 besteht, die als Schlingfeder ausgebildet ist. Die Schenkel 61, 62 der Antriebsfeder 6 liegen an Ausnehmungen bzw. Anschlägen 13, 14 der Antriebsachse 12 an und werden bei einer Betätigung des Antriebshebels 11 in der einen oder anderen Verstellrichtung durch die Anschläge 13, 14 der Antriebsachse 12 zur Aufweitung der Antriebsfeder 6 verschoben, so daß diese kraftschlüssig an der Innenseite des zylindrischen Teils des topfförmigen Mitnehmers 5 anliegt.

Eine Bremseinrichtung, bestehend aus einer als Schlingfeder ausgebildeten Bremsfeder 7 und einem als Bremsgehäuse wirkenden Gehäuseteil 3, ist ebenfalls konzentrisch zur Antriebsachse 12 des Antriebselements 1 angeordnet. Die Schenkel 71, 72 der Bremsfeder 7 weisen ein minimales Spiel zu den Anschlägen 51, 52 des Mitnehmers 5 und ein größeres Spiel zu den Anschlägen 23, 24 der Abtriebsklaue 22 auf. Da die Bremsfeder 7 im Ruhezustand, d.h. bei nicht betätigtem Antriebshebel 11 kraftschlüssig an der Innenwand des zylindrischen Teils des topfförmigen Bremsgehäuses 3 anliegt, wird bei einer geringfügigen Drehbewegung des Mitnehmers 5 die Bremsfeder 7 in ihrem äußeren Durchmesser verringert bzw. zusammengezogen und damit die kraftschlüssige Anlage an der Innenwand des Gehäuseteils bzw. Bremsgehäuses 3 aufgehoben.

Ebenfalls konzentrisch zur Antriebsachse 12 ist eine drehbare Hülse 8 vorgesehen, die topfförmig ausgebildet ist und eine erste Mitnahmelasche 81 aufweist, die mit Spiel an die Schenkel 61, 62 der Antriebsfeder 6 anstößt. Eine zweite, nach außen abgewinkelte Mitnahmelasche 82 dient zur Anlage an eine konzentrisch zur Antriebsachse 12 angeordnete Rückstellfeder 9, die um die Außenwand des zylindrischen Teils des Bremsgehäuses 3 gelegt ist und mit ihren Schenkeln 91, 92 sowohl an der zweiten Mitnahmelasche 82 der drehbaren Hülse 8 als auch an einer Lasche 30 des Bremsgehäuses 3 anliegt.

Nachstehend soll die Funktionsweise der in den Figuren 1 und 2 dargestellten Verstellvorrichtung mit stufenlosem Schrittschaltwerk erläutert werden.

In der Ruhestellung, d.h. bei nicht betätigtem Antriebshebel 11, liegt - wie vorstehend ausgeführt - die Antriebsfeder 6 mit Kraftschluß an der Innenwand des Mitnehmers 5 an, und die Bremsfeder 7 liegt kraftschlüssig an der Innenwand des Bremsgehäuses 3 an. Beim Betätigen des Antriebshebels 11 wird die Antriebsachse 12 in der einen oder anderen Drehrichtung ausgelenkt und bewirkt mit dem einen oder anderen Anschlag 13, 14, die mit Spiel einen Formschluß mit den Schenkeln 61, 62 der Antriebsfeder 6 bilden, ein Aufweiten der Antriebsfeder 6 zur kraftschlüssigen Anlage der Antriebsfeder 6 an dem Mitnehmer 5. Infolge der formschlüssigen Verbindung der Schenkel 61, 62 der Antriebsfeder 6 mit den Anschlägen 13, 14 der Antriebsachse 12 folgt der Mitnehmer 5 der Drehbewegung der Antriebsachse 12.

Die formschlüssige Verbindung der Anschläge 51, 52 des Mitnehmers 5 mit den Schenkeln 71, 72 der Bremsfeder 7 bewirkt beim Auslenken des Mitnehmers 5 ein Zusammenziehen der Bremsfeder 7, so daß diese von ihrer kraftschlüssigen Anlage an der Innenwand des Bremsgehäuses 3 gelöst wird und der Mitnehmer 5 im wesentlichen ungebremst der Drehbewegung der Antriebsachse 12 folgt und diese Drehbewegung durch formschlüssige Anlage des Mitnehmers 5 an der Lasche 22 des Ritzels 21 auf das Abtriebselement 2 überträgt. Dabei schleift bei der Drehbewegung des Mitnehmers 5 die Bremsfeder 7 mit geringer Reibwirkung am Bremsgehäuse 3.

Da die Schenkel 91, 92 der Rückstellfeder 9 einerseits an der Lasche 30 des Bremsgehäuses 3 und andererseits an der zweiten Mitnahmelasche 82 der Hülse 8 anliegen und die erste Mitnahmelasche 81 der drehbaren Hülse 8 mit Spiel mit den Schenkeln 61, 62 der Antriebsfeder 6 verbunden ist, wird bei einer Drehbewegung des Antriebshebels 11 und damit der Antriebsachse 12 die Rückstellfeder 9 gespannt und dabei die drehbare Hülse 8 gegen das Bremsgehäuse 3 vorgespannt. Aufgrund dieser Vorspannung wird die drehbare Hülse 8 bei Beendigung der Antriebskraft auf den Antriebshebel 11 in ihre Ausgangslage zurückgedreht. Dabei zieht sie mit ihrer ersten Mitnahmelasche 81 die Antriebsfeder 6 in beiden Drehrichtungen zusammen, so daß die kraftschlüssige Anlage der Antriebsfeder 6 am Mitnehmer 5 aufgehoben wird.

Die über die erste Mitnahmelasche 81 der drehbaren Hülse 8 mit Spiel mit der drehbaren Hülse 8 verbundene Antriebsachse 12 und damit der Antriebshebel 11 folgen der Rückstellbewegung der drehbaren Hülse 8 infolge der Federkraft der Rückstellfeder 9 bis zum Erreichen des entspannten Zustandes der Rückstellfeder 9.

Aufgrund des Zusammenziehens der Antriebsfeder 6 durch die erste Mitnahmelasche 81 der drehbaren Hülse 8 und der daraus resultierenden Aufhebung der kraftschlüssigen Anlage der Antriebsfeder 6 am Mitnehmer 5 wird der Mitnehmer 5 und die drehfest mit dem Ritzel 21 verbundene Lasche 22 des Abtriebselements 2 von der Rückstellbewegung der Hülse 8 sowie der Antriebsachse 12 und des Antriebshebels 11 entkoppelt, so daß das Abtriebselement 2 in der ausgelenkten Stellung verharrt.

Wirkt auf das Abtriebselement 2 ein größeres Drehmoment ein als auf das Antriebselement 1, so stoßen die Anlagekanten 23, 24 der mit dem Ritzel 21 verbundenen Klaue 22 an die Schenkel 71, 72 der Bremsfeder 7 in Richtung auf eine Aufweitung der Bremsfeder 7, so daß deren kraftschlüssige Anlage an den Innenwand des Bremsgehäuses 3 verstärkt und damit das auf das Ritzel 21 des Abtriebselements 2 wirkende Moment blockiert wird.

Diese Wirkung tritt auch ein, wenn mit Beendigung der Verstellbewegung des Antriebshebels 11 die Rückstellung des Antriebshebels 11 in der vorstehend beschriebenen Weise erfolgt und der Mitnehmer 5 und damit das Ritzel 21 von der Rückstellbewegung entkoppelt wird. Ein während der Rückstellbewegung des Antriebshebels 11 auf das Ritzel 21 ausgeübtes Drehmoment würde unverzüglich ein kraftschlüssiges Anliegen der Bremsfeder 7 am Bremsgehäuse 3 zur Folge haben, so daß das Ritzel 21 des Abtriebselements 2 in der ausgelenkten Stellung verharrt. Erst eine Bewegung des Antriebshebels 11 in der entgegengesetzten Drehrichtung würde in der vorstehend beschriebenen Weise zu einer Rückführung der Auslenkstellung des Abtriebselements 2 führen.

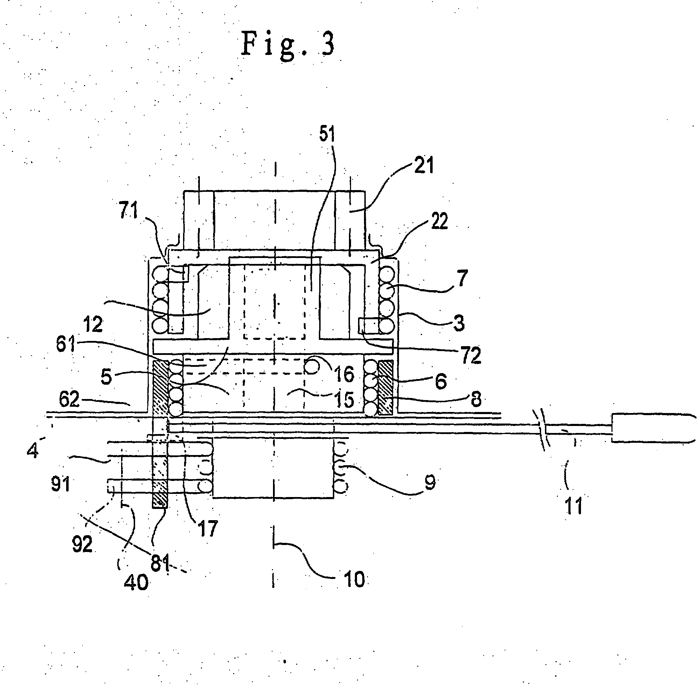

Die in Figur 3 im Längsschnitt dargestellte Ausführungsform zeichnet sich durch einen insgesamt geringen Durchmesser aus und eignet sich insbesondere für eine Anordnung bei geringem radialen Platzangebot. In dieser Ausführungsform sind die einzelnen Baugruppen, insbesondere die Federelemente, nicht konzentrisch, sondern koaxial zur Antriebsachse 12 bzw. Drehachse 10 angeordnet. Das Zusammenwirken der einzelnen Funktionsmodule dieser Verstellvorrichtung entspricht jedoch der im Zusammenhang mit dem vorstehend beschriebenen Ausführungsbeispiel erzielten Wirkungsweise.

Der Antriebshebel 11 weist einen koaxial zur Drehachse 10 angeordneten Zapfen 15 auf, der einen ersten Anschlag 16 für den Schenkel 61 einer konzentrisch zum Zapfen 15 angeordneten Antriebsfeder 6 ausbildet. Eine Lasche 17 des Antriebshebels 11 liegt am zweiten Schenkel 62 der Antriebsfeder 6 an, so daß bei Betätigung des Antriebshebels 11 in der einen oder anderen Drehrichtung die auf die Antriebsachse 12 vorgespannte Antriebsfeder 6 kraftschlüssig mit der Antriebsachse 12 verbunden wird.

Die Antriebsachse 12 nimmt den mit ihr formschlüssig verbundenen Mitnehmer 5 mit, dessen Klauen 51, 52 an den Schenkeln 71, 72 der Bremsfeder 7 anliegen, die im entspannten Zustand kraftschlüssig am Bremsgehäuse 3 anliegt. Durch die Einwirkung des Mitnehmers 5 auf die Bremsfeder 7 wird diese von ihrer kraftschlüssigen Anlage am Bremsgehäuse 3 gelöst, so daß das vom Antriebshebel 11 ausgeübte Drehmoment auf den Mitnehmer 5 übertragen wird, so daß der Mitnehmer 5 im wesentlichen ungebremst der Drehbewegung der Antriebsachse 12 folgt und diese Drehbewegung durch formschlüssige Anlage des Mitnehmers 5 an der Lasche 22 des Ritzels 21 auf das Abtriebselement 2 überträgt. Dabei schleift bei der Drehbewegung des Mitnehmers 5 die Bremsfeder 7 mit geringer Reibwirkung am Bremsgehäuse 3.

Die konzentrisch zu einem Teil der Antriebsachse 12 angeordnete Rückstellfeder 9 liegt mit ihren Schenkeln 91, 92 an Laschen 81 der drehbaren Hülse 8 sowie des Gehäusedeckels 4 an. Die Hülse 8 ist weiterhin über die Lasche 81 mit dem Schenkel 62 der Antriebsfeder 6 verbunden, so daß nach Beendigung der Verstellbewegung durch den Antriebshebel 11 in der darauffolgenden Rückstellbewegung infolge der Vorspannung der Rückstellfeder 9 zwischen dem Gehäusedeckel 4 und der drehbaren Hülse 8 bzw. der Antriebsachse 12 die drehbare Hülse 8 in die der Verstellbewegung entgegengesetzten Drehrichtung zurückbewegt wird und über die Lasche 81 und den Schenkel 62 die Antriebsfeder 6 entspannt, so daß diese von ihrer kraftschlüssigen Anlage an der Antriebsachse 12 gelöst wird. Infolge der Rückstellbewegung der Rückstellfeder 9 wird der Antriebshebel 11 in die Ausgangslage zurückgestellt, ohne daß die Antriebsachse 12 und damit der Mitnehmer 5 und infolge davon das Ritzel 21 mitbewegt werden.

Während der Rückstellbewegung bzw. bei einem abtriebsseitigen Drehmoment, das das antriebsseitige Drehmoment übersteigt, wirkt die Lasche 22 des Ritzels 21 unmittelbar auf die Schenkel 71, 72 der Bremsfeder 7 ein, wodurch die Bremsfeder 7 aufgespreizt wird. Dadurch legt sich die Bremsfeder 7 kraftschlüssig an das Bremsgehäuse 3 an und das vom Ritzel 21 ausgeübte Drehmoment wird unverzüglich abgebaut.

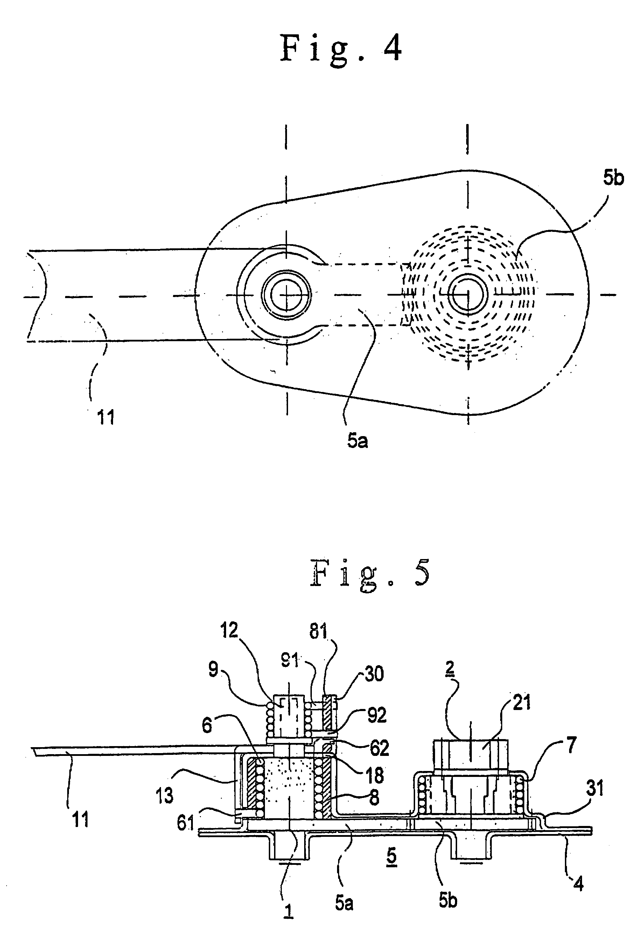

Das in den Figuren 4 und 5 dargestellte Ausführungsbeispiel zeigt eine Bauform mit einer Übersetzung zwischen der Antriebs- und der Abtriebsseite der Verstellvorrichtung, die zum einen das Spiel auf der Antriebsseite der Verstellvorrichtung minimiert und zum anderen ein nahezu beliebiges Übersetzungsverhältnis zwischen Antriebs- und Abtriebsseite zur Einstellung der Antriebskraft bzw. des Verstellweges bewirkt.

In dieser Ausführungsform sind die Antriebsfeder 6 und die Bremsfeder 7 nebeneinander angeordnet und über einen geteilten Mitnehmer 5, dessen vorzugsweise als Stanzteile ausgeführten Mitnehmerteile 5a und 5b über eine Zahnsegmentoder Zahnscheibenverbindung formschlüssig miteinander gekoppelt sind, miteinander verbunden. Der Antriebshebel 11 wirkt über eine Lasche 13 bzw. das Hebelende 18 auf die Schenkel 61, 62 der Antriebsfeder 6 und zieht die Antriebsfeder 6 bei einer Verstellbewegung auf das erste Mitnehmerteil 5a und bewirkt durch die kraftschlüssige Anlage der Antriebsfeder 6 an dem zylindrischen Teil des ersten Mitnehmerteils 5a eine Übertragung der vom Antriebshebel 11 ausgeübten Antriebsbewegung auf das erste Mitnehmerteil 5a. Gleichzeitig wird die Antriebskraft auf die drehbare Hülse 8 übertragen, durch deren Drehung die Rückstellfeder 9 mit ihren Schenkeln Enden 91, 92 zwischen der drehbaren Hülse 8 und dem Gehäuseteil 30 vorgespannt wird.

Über die Verzahnung der beiden Mitnehmerteile 5a und 5b wird die Antriebsbewegung des ersten Mitnehmerteils 5a auf das andere Mitnehmerteil 5b übertragen, das durch Anlage an die Schenkel der Bremsfeder 7 die Bremsfeder 7 zusammenzieht und damit von ihrer kraftschlüssigen Verspannung mit dem Gehäuseteil 31 löst. Damit kann das zweite Mitnehmerteil 5b bei ggf. schleifender Anlage der Bremsfeder 7 an dem Gehäuseteil 31 ungehindert der Antriebsbewegung folgen und diese über die formschlüssige Verbindung des zweiten Mitnehmerteil 5b mit dem Ritzel 21 auf das Ritzel 21 übertragen.

Bei einem auf das Ritzel 21 ausgeübten Drehmoment, das größer ist als das antriebsseitige Drehmoment, bewirkt die vom Ritzel 21 ausgehende Drehbewegung ein Aufweiten der Bremsfeder 7, so daß diese kraftschlüssig am Gehäuseteil 31 anliegt und damit das vom Ritzel 21 ausgehende Drehmoment unmittelbar abbaut.

In der Rückstellphase wirkt die Rückstellfeder 9 in der vorstehend beschriebenen Weise auf die drehbare Hülse 8, die wiederum die Antriebsfeder 6 aufweitet und damit die Koppelung zum ersten Mitnehmerteil 5a aufhebt. Durch die an der Rückstellfeder 9 anliegende Lasche 81 wird der Antriebshebel 11 zurückgestellt.

## Patentansprüche

1. Stufenlose, beidseitig wirkende Verstellvorrichtung mit einem Antriebselement, einem bei einer Drehbewegung des Antriebselements (1) in dem einen oder anderen Drehsinn winkelverstellbaren Abtriebselement (2) und einem zwischen dem Antriebs- und dem Abtriebselement (1, 2) angeordneten Schrittschaltwerk, das eine bei Betätigung des Antriebselements (1) mit diesem kraftschlüssig verbindbare und mit dem Abtriebselement (2) verbundene Kupplungseinrichtung (5, 6) und eine Bremseinrichtung (3, 7) enthält, die bei ruhendem Antriebselement (1) oder bei einem abtriebsseitig eingeleiteten Drehmoment die Kupplungseinrichtung (5, 6) kraftschlüssig blockiert,
**dadurch gekennzeichnet,**
**daß** die Kupplungseinrichtung (5, 6) eine mit dem Antriebselement (1) in Wirkverbindung stehende An-triebsfeder (6) aufweist, die bei Betätigung des An-triebselements (1) kraftschlüssig mit einem Mitnehmer (5) der Kupplungseinrichtung (4,5) verbunden ist und eine Drehbewegung des Antriebselements (1) auf den Mitnehmer (5) überträgt, und daß die Bremseinrichtung (3, 7) eine Bremsfeder (7) aufweist, die formschlüssig mit dem Mitnehmer (5) und dem Abtriebselement (2) verbunden ist und sich bei ruhendem Antriebselement (1) oder bei abtriebsseitigem Drehmoment kraftschlüssig an einem ortsfesten Gehäuse oder Gehäuseteil (3) der Verstellvorrichtung abstützt.

2. Verstellvorrichtung nach Anspruch 1, **dadurch gekennzeichnet, daß** die Antriebsfeder (6) und die Bremsfeder (7) Schlingfedern sind, die kraftschlüssig an entsprechend der Form der Schlingfedern (6, 7) ausgebildeten Flächen des Mitnehmers (5) oder des Gehäuses oder Gehäuseteils (3) der Verstellvorrichtung anliegen.

3. Verstellvorrichtung nach Anspruch 1 oder 2, **dadurch gekennzeichnet, daß** der Mitnehmer (5) koaxial zur Antriebsachse (12) des Antriebselements (1) angeordnet und klauenartig ausgebildet ist und in ein abtriebsseitiges, klauenartiges Kupplungselement (22) eingreift.

4. Verstellvorrichtung nach mindestens einem der vorangehenden Ansprüche, **dadurch gekennzeichnet, daß** das stufenlose Schrittschaltwerk eine das Antriebselement (1) bei blockierter Kupplungseinrichtung (5, 6) in die Ausgangslage vor der Verstellbewegung zurückführende Rück-Stelleinrichtung (9, 30, 82) enthält.

5. Verstellvorrichtung nach Anspruch 4, **dadurch gekennzeichnet, daß** die Rückstelleinrichtung (8, 9, 30, 81, 82) aus einer an einer Lasche (30) des ortsfesten Gehäuseteils (3) und an einer Lasche (81) einer drehbaren, koaxial zur Antriebsachse (12) des Antriebselements (1) angeordneten Hülse (8) anliegenden Rückstellfeder (9) besteht, und daß die Hülse (8) über eine Lasche (81, 82) formschlüssig mit der Antriebsfeder (6) verbunden ist und die kraftschlüssige Anlage der Antriebsfeder (6) am Mitnehmer (5) mit beendeter An-triebskraft aufhebt.

6. Verstellvorrichtung nach Anspruch 5, **dadurch gekennzeichnet, daß** die Hülse (8), der Mitnehmer (5) und das Gehäuseteil (3) aus konzentrisch zueinander um die Antriebsachse (12) des Antriebselements (1) angeordneten Zylindern bestehen, daß die Antriebsfeder (6) um die Hülse (8) angeordnet ist und mit ihren Schenkeln (61, 62) in Ausnehmungen oder an Anschlägen (13, 14) der An-triebsachse (12) ein- oder angreift, daß der Mitnehmer (5) Ausnehmungen oder Anlagekanten (51, 52) zur Aufnahme der Schenkel (71, 72) der den Mitnehmer (5) zumindest teilweise umfassenden Bremsfeder (7) aufweist, daß das Gehäuseteil (3) die Bremsfeder (7) umgibt und daß auf einem Teil des Umfangs des Mitnehmers (5) und der Bremsfeder (7) mindestens eine Klaue (22) des Abtriebselements (2) an die Schenkel (71, 72) der Bremsfeder (7) anschlägt.

7. Verstellvorrichtung nach Anspruch 5 oder 6, **dadurch gekennzeichnet, daß** die Rückstellfeder (9) ebenfalls als Schlingfeder ausgebildet ist und das Gehäuseteil (3) umgibt und daß die Schenkel (91, 92) der Rückstellfeder (9) einerseits an einer Lasche (30) des Gehäuseteils (3) und andererseits an einer Lasche (82) der drehbaren Hülse (8) anliegen.

8. Verstellvorrichtung nach mindestens einem der vorangehenden Ansprüche, **dadurch gekennzeichnet, daß** die Antriebsachse (12) des Antriebselements (1), das Gehäuseteil (3), die drehbare Hülse (8), der Mitnehmer (5) und das Abtriebselement (2) im wesentlichen zylinderförmig ausgebildet und koaxial zueinander angeordnet sind, daß zwischen konzentrischen Teilen des Abtriebselements (2) und der drehbaren Hülse (8) die Antriebsfeder (6) angeordnet und mit ihren Schenkeln (61, 62) mit Laschen des Antriebselements (1) und der drehbaren Hülse (8) formschlüssig verbunden ist, und daß zwischen konzentrischen Teilen des Gehäuseteils (3) und des Mitnehmers (5) die Bremsfeder (7) angeordnet ist und mit ihren Schenkeln (71, 72). an Laschen (51, 52) des Mitnehmers (5) anliegt.

9. Verstellvorrichtung nach Anspruch 5, **dadurch gekennzeichnet, daß** die Rückstellfeder (9) als Schlingfeder ausgebildet ist und die Antriebsachse (12) umgibt, und daß die Schenkel (91, 92) der Rückstellfeder (9) einerseits an einer Lasche (40) des Gehäusedeckels (4) und andererseits an einer Klaue (81) der drehbaren Hülse (8) anliegen.

10. Verstellvorrichtung nach mindestens einem der vorangehenden Ansprüche, **dadurch gekennzeichnet, daß** das Antriebselement (1), die drehbare Hülse (8), der Mitnehmer (5) und das Abtriebselement (2) in Richtung der Antriebsachse (12) hintereinander angeordnet sind.

11. Verstellvorrichtung nach mindestens einem der vorangehenden Ansprüche, **dadurch gekennzeichnet, daß** ein erstes Gehäuseteil (30), die Antriebsfeder (6) und ein erster Mitnehmer (5a) koaxial zur Antriebsachse (12) des Antriebselements (1) und ein zweites Gehäuseteil (31), die Bremsfeder (7) und ein zweiter Mitnehmer (5b) koaxial zur Achse des Abtriebselements (2) angeordnet sind und daß der erste Mitnehmer (5a) und der zweite Mitnehmer (5b) miteinander verbunden sind.

12. Verstellvorrichtung nach Anspruch 11, **dadurch gekennzeichnet, daß** die beiden axialen Anordnungen des ersten Gehäuseteils (30), der Antriebsfeder (6) und des ersten Mitnehmers (5a) sowie des zweiten Gehäuseteils (31), der Bremsfeder (7) und des zweiten Mitnehmers (5b) nebeneinander liegen.

## Claims

1. Infinitely operating two-way adjusting device having a drive element, an output element (2) which can be adjusted in angle in one or other rotary direction during rotary movement of the drive element (1), and a stepped switching mechanism which is mounted between the drive and the output elements (1,2) and which contains a coupling device (5,6) which is connected to the output element (2) and during operation of the drive element (1) can be connected in force-locking engagement with same, and a brake device (3,7) which when the drive element (1) is resting or when torque is introduced on the output side blocks the coupling device (5,6) with force-locking engagement,
**characterised in that**
the coupling device (5, 6) has a drive spring (6) which is in active connection with the drive element (1) and which during operation of the drive element (1) is connected in force-locking engagement with an entrainment member (5) of the coupling device (4, 5) and transfers a rotary movement of the drive element (1) to the entrainment member (5), and that the brake device (3,7) has a brake spring (7) which is connected in keyed engagement with the entrainment member (5) and the output element (2) and, when the drive element (1) is resting or in the event of torque on the output side, is supported with force-locking engagement on a locally fixed housing or housing part (3) of the adjusting device.

2. Adjusting device according to claim 1 **characterised in that** the drive spring (6) and the brake spring (7) are loop springs which adjoin with force locking engagement surfaces of the entrainment member (5) or of the housing or housing part (3) of the adjusting device which are formed to match the shape of the loop springs (6,7).

3. Adjusting device according to claim 1 or 2 **characterised in that** the entrainment member (5) is mounted coaxial with the drive axis (12) of the drive element (1) and is formed claw-like and engages in a claw-like coupling element (22) on the output side.

4. Adjusting device according to at least one of the preceding claims **characterised in that** the infinite stepped switching mechanism contains a resetting device (9, 30, 82) which returns the drive element (1) to the starting position before the adjusting movement when the coupling device (5,6) is blocked.

5. Adjusting device according to claim 4 **characterised in that** the resetting device (8, 9, 30, 81, 82) consists of a resetting spring (9) bearing on a shackle (30) of the locally fixed housing part (3) and on a shackle (81) of a rotatable sleeve (8) mounted coaxial with the drive axis (12) of the drive element (1), and that the sleeve (8) is connected through a shackle (81, 82) in keyed engagement with the drive spring (6) and lifts the force-locking contact between the drive spring (6) and the entrainment member (5) when the drive force is terminated.

6. Adjusting device according to claim 5 **characterised in that** the sleeve (8), the entrainment member (5) and the housing part (3) consist of cylinders arranged concentric with each other around the drive axis (12) of the drive element (1), that the drive spring (6) is mounted around the sleeve (8) and engages by its arms (61, 62) in recesses or on stops (13, 14) of the drive axis (12), that the entrainment member (5) has recesses or contact bearing edges (51, 52) for receiving the arms (71, 72) of the brake spring (7) which embraces at least partially the entrainment member (5), that the housing part (3) encloses the brake spring (7) and that on a part of the circumference of the entrainment member (5) and the brake spring (7) at least a claw (22) of the output element (2) stops against the arms (71, 72) of the brake spring (7).

7. Adjusting device according to claim 5 or 6 **characterised in that** the resetting spring (9) is likewise formed as a loop spring and encloses the housing part (3) and that the arms (91, 92) of the resetting spring (9) adjoin a shackle (30) of the housing part (3) on one side and a shackle (82) of the rotatable sleeve (8) on the other side.

8. Adjusting device according to at least one of the preceding claims **characterised in that** the drive axis (12) of the drive element (1), the housing part (3), the rotatable sleeve (8), the entrainment member (5) and the output element (2) are formed substantially cylinder-shaped and arranged coaxial relative to each other, that the drive spring (6) is mounted between the concentric parts of the output element (2) and the rotatable sleeve (8) and is connected in keyed engagement by its arms (61, 62) with shackles of the drive element (1) and the rotatable sleeve (8), and that the brake spring (7) is mounted between concentric parts of the housing part (3) and the entrainment member (5) and adjoins the shackles (51, 52) of the entrainment member (5) by its arms (71, 72).

9. Adjusting device according to claim 5 **characterised in that** the resetting spring (9) is formed as a loop spring and encloses the drive axis (12), and that the arms (91, 92) of the resetting spring (9) adjoin a shackle (40) of the housing cover (4) on one side and a claw (81) of the rotatable sleeve (8) on the other side.

10. Adjusting device according to at least one of the preceding claims **characterised in that** the drive element (1), the rotatable sleeve (8), the entrainment member (5) and the output element (2) are arranged in succession in the direction of the drive axis (12).

11. Adjusting device according to at least one of the preceding claims **characterised in that** a first housing part (30), the drive spring (6) and a first entrainment member (5a) are arranged coaxial relative to the drive axis (12) of the drive element (1) and a second housing part (31), the brake spring (7) and a second entrainment member (5b) are arranged coaxial relative to the axis of the output element (2) and that the first entrainment member (5a) and the second entrainment member (5b) are connected together.

12. Adjusting device according to claim 11 **characterised in that** the two axial assemblies of the first housing part (30), the drive spring (6) and the first entrainment member (5a) as well as of the second housing part (31), brake spring (7) and second entrainment member (5b) are next to one another.

## Revendications

1. Dispositif de réglage à action continue bilatérale, comprenant un élément menant, un élément mené (2) pouvant être réglé angulairement dans l'une ou l'autre direction de rotation, lors d'un mouvement rotatoire dudit élément menant (1), et un mécanisme de commutation en mode pas à pas qui est interposé entre les éléments menant et mené (1, 2), et englobe un système d'accouplement (5, 6) relié à l'élément mené (2) et pouvant être relié mécaniquement à l'élément menant (1), lors d'un actionnement de ce dernier, ainsi qu'un système de freinage (3, 7) bloquant mécaniquement ledit système d'accouplement (5, 6) lorsque l'élément menant (1) est au repos, ou en présence d'un couple de rotation induit côté sortie,
**caractérisé par le fait**
**que** le système d'accouplement (5, 6) présente un ressort d'entraînement (6) qui est en liaison efficace avec l'élément menant (1) et qui, lors d'un actionnement dudit élément menant (1), est relié mécaniquement à un organe d'entraînement (5) dudit système d'accouplement (5, 6), et répercute un mouvement rotatoire de l'élément menant (1) sur l'organe d'entraînement (5) ; et par le fait que le système de freinage (3, 7) présente un ressort de freinage (7) qui est relié par concordance de formes à l'organe d'entraînement (5) et à l'élément mené (2) et qui, lorsque l'élément menant (1) est au repos ou en présence d'un couple de rotation côté sortie, prend mécaniquement appui contre un carter fixe ou une partie de carter fixe (3) du dispositif de réglage.

2. Dispositif de réglage selon la revendication 1, **caractérisé par le fait que** le ressort d'entraînement (6) et le ressort de freinage (7) sont des ressorts hélicoïdaux s'appliquant mécaniquement contre des surfaces réalisées en concordance avec la forme desdits ressorts hélicoïdaux (6, 7), et situées sur l'organe d'entraînement (5) ou sur le carter ou la partie de carter (3) dudit dispositif de réglage.

3. Dispositif de réglage selon la revendication 1 ou 2, **caractérisé par le fait que** l'organe d'entraînement (5) occupe une position coaxiale à l'axe d'entraînement (12) de l'élément menant (1), possède une réalisation du type griffe, et pénètre dans un élément d'accouplement (22) du type griffe, disposé côté sortie.

4. Dispositif de réglage selon au moins l'une des revendications précédentes, **caractérisé par le fait que** le mécanisme de commutation continue en mode pas à pas comprend un système de rappel (9, 30, 82) ramenant l'élément menant (1) à la position initiale, préalablement au mouvement de réglage, lorsque le système d'accouplement (5, 6) est bloqué.

5. Dispositif de réglage selon la revendication 4, **caractérisé par le fait que** le système de rappel (8, 9, 30, 81, 82) est constitué d'un ressort de rappel (9) appliqué contre une patte (30) de la partie de carter fixe (3), et contre une patte (81) d'une douille rotative (8) agencée coaxialement à l'axe d'entraînement (12) de l'élément menant (1) ; et **par le fait que** ladite douille (8) est reliée par concordance de formes au ressort d'entraînement (6), par l'intermédiaire d'une patte (81, 82), et supprime le contact mécanique dudit ressort d'entraînement (6) avec l'organe d'entraînement (5) lorsque la force d'entraînement cesse d'être appliquée.

6. Dispositif de réglage selon la revendication 5, **caractérisé par le fait que** la douille (8), l'organe d'entraînement (5) et la partie de carter (3) sont composés de cylindres mutuellement concentriques, agencés autour de l'axe d'entraînement (12) de l'élément menant (1) ; **par le fait que** le ressort d'entraînement (6) est placé autour de ladite douille (8) et pénètre ou s'applique, par ses branches (61, 62), dans des évidements ou contre des butées (13, 14) dudit axe d'entraînement (12) ; **par le fait que** l'organe d'entraînement (5) comporte des évidements ou des arêtes d'appui (51, 52), en vue de recevoir les branches (71, 72) du ressort de freinage (7) ceinturant au moins partiellement ledit organe d'entraînement (5) ; **par le fait que** la partie de carter (3) entoure ledit ressort de freinage (7) ; et **par le fait que**, sur une partie du pourtour de l'organe d'entraînement (5) et du ressort de freinage (7), au moins une griffe (22) de l'élément mené (2) vient buter contre les branches (71, 72) dudit ressort de freinage (7).

7. Dispositif de réglage selon la revendication 5 ou 6, **caractérisé par le fait que** le ressort de rappel (9) est pareillement réalisé sous la forme d'un ressort hélicoïdal, et entoure la partie de carter (3) ; et **par le fait que** les branches (91, 92) dudit ressort de rappel (9) portent, d'une part, contre une patte (30) de ladite partie de carter (3) et, d'autre part, contre une patte (82) de la douille rotative (8).

8. Dispositif de réglage selon au moins l'une des revendications précédentes, **caractérisé par le fait que** l'axe d'entraînement (12) de l'élément menant (1), la partie de carter (3), la douille rotative (8), l'organe d'entraînement (5) et l'élément mené (2) sont, pour l'essentiel, de réalisation cylindrique et sont agencés coaxialement les uns aux autres ; **par le fait que** le ressort d'entraînement (6) est interposé entre des parties concentriques de l'élément mené (2) et de la douille rotative (8) et est relié par concordance de formes, par ses branches (61, 62), à des pattes de l'élément menant (1) et de la douille rotative (8) ; et **par le fait que** le ressort de freinage (7) est interposé entre des parties concentriques de la partie de carter (3) et de l'organe d'entraînement (5) et est appliqué, par ses branches (71, 72), contre des pattes (51, 52) dudit organe d'entraînement (5).

9. Dispositif de réglage selon la revendication 5, **caractérisé par le fait que** le ressort de rappel (9) est réalisé sous la forme d'un ressort hélicoïdal, et entoure l'axe d'entraînement (12) ; et **par le fait que** les branches (91, 92) dudit ressort de rappel (9) portent, d'une part, contre une patte (40) du couvercle (4) du carter et, d'autre part, contre une griffe (81) de la douille rotative (8).

10. Dispositif de réglage selon au moins l'une des revendications précédentes, **caractérisé par le fait que** l'élément menant (1), la douille rotative (8), l'organe d'entraînement (5) et l'élément mené (2) sont placés en succession mutuelle dans la direction de l'axe d'entraînement (12).

11. Dispositif de réglage selon au moins l'une des revendications précédentes, **caractérisé par le fait qu'**une première partie de carter (30), le ressort d'entraînement (6) et un premier organe d'entraînement (5a) sont agencés coaxialement à l'axe d'entraînement (12) de l'élément menant (1), et une seconde partie de carter (31), le ressort de freinage (7) et un second organe d'entraînement (5b) sont agencés coaxialement à l'axe de l'élément mené (2) ; et **par le fait que** le premier organe d'entraînement (5a) et le second organe d'entraînement (5b) sont reliés l'un à l'autre.

12. Dispositif de réglage selon la revendication 11, **caractérisé par le fait que** les deux agencements axiaux de la première partie de carter (30), du ressort d'entraînement (6) et du premier organe d'entraînement (5a), ainsi que de la seconde partie de carter (31), du ressort de freinage (7) et du second organe d'entraînement (5b), se trouvent en juxtaposition mutuelle.
